# FASCICULE DE BREVET EUROPEEN

(11) **EP 1 239 454 B1**
(45) Date de publication et mention de la délivrance du brevet: **14.01.2004**
(21) Numéro de dépôt: 02362003.2
(22) Date de dépôt: 07.03.2002
(51) Int. Cl.: G10K 11/168, F02C 7/045

(54) **Procédé de fabrication d'un panneau à couche résistive acoustique adaptée et panneau acoustique ainsi obtenu**
Herstellungsverfahren einer Platte mit angepasster, schallwiederstandsfähiger Schicht, sowie die hergestellte Platte
Method of manufacturing a panel with an adapted, acoustically resistive layer and resulting panel

(30) Priorité: 09.03.2001 FR 0103227
(43) Date de publication de la demande: 11.09.2002
(73) Titulaire: AIRBUS FRANCE, 31060 Toulouse (FR)
(72) Inventeur: Porte, Alain, 31770 Colomiers (FR); Batard, Hervé, 31170 Tournefeuille (FR)
(74) Mandataire: Thébault, Jean-Louis

(56) Documents cités:
- FR-A- 2 767 411
- GB-A- 1 436 724
- GB-A- 1 490 923
- US-A- 4 327 816
- US-A- 5 594 216

## Description

La présente invention a trait aux panneaux d'atténuation acoustique et plus particulièrement ceux tapissant les canaux annulaires de soufflante formés dans les nacelles de turbomoteurs d'aéronefs notamment.

De tels panneaux forment l'enveloppe, côté canal de soufflante, de la nacelle, en arrière de la lèvre d'entrée d'air et présentent une structure propre à atténuer les bruits produits par le moteur enveloppé par la nacelle et notamment ceux produits par la soufflante.

Dans la pratique, ces panneaux intègrent une âme alvéolaire, telle qu'une structure en nid d'abeilles flanquée, côté canal de soufflante, d'une couche résistive acoustique et, du côté opposé, d'un réflecteur arrière.

La couche résistive acoustique assure un rôle dissipatif, en transformant partiellement l'énergie acoustique de l'onde sonore la traversant en chaleur.

Cette structure poreuse peut être, par exemple, un tissu métallique ou un tissu de fibres de carbone dont le tissage permet de remplir sa fonction dissipatrice.

Ces panneaux acoustiques devant également avoir des propriétés structurales suffisantes pour notamment recevoir et transférer les efforts aérodynamiques, inertiels et ceux liés à la maintenance de la nacelle, vers les liaisons structurales nacelle / moteur, il est nécessaires de conférer à la couche résistive acoustique des propriétés structurales.

A cette fin, on peut, comme illustré par le brevet GB 2 130 963, réaliser une couche résistive acoustique à deux composants, à savoir une couche structurale, côté nid d'abeilles et une couche poreuse en surface, ou bien utiliser comme couche résistive un tissu combinant à la fois la fonction acoustique et la fonction structurale en choisissant un diamètre des fils du tissu donnant à ce dernier une bonne résistance aux efforts couplée à une bonne résistance acoustique.

Pour la fabrication de tels panneaux, on connaît le procédé consistant à réaliser l'ensemble annulaire formant la paroi du canal de soufflante en deux demi-panneaux et deux éclisses comprenant, pour chaque demi-panneau, les étapes suivantes :
- prédéformation d'une nappe de structure poreuse sur une forme identique à un demi-panneau à l'aide de mors étirant le matériau poreux jusqu'à sa limite élastique,
- mesure acoustique de la forme ainsi réalisée afin de qualifier la valeur moyenne de porosité acoustique,
- adaptation à la valeur moyenne ci-dessus de l'écart de bobinage des fils de carbone destinés à être déposés sur la couche poreuse pour constituer une couche structurale,
- mise en place sur un moule approprié de la forme pré-déformée,
- puis réalisation du demi-panneau par des techniques connues de bobinage desdits fils de carbone, et de mise en place de l'âme alvéolaire et du réflecteur arrière.

Ce procédé présente des inconvénients.

En effet, la forme à réaliser n'étant pas de circonvolution, il existe dans la nappe déformée des zones non homogènes, c'est-à-dire des zones détendues et des zones contraintes, qui dégradent la qualité acoustique générale de la structure poreuse. L'écart de bobinage des fils de carbone étant adapté à la valeur moyenne de porosité acoustique de la structure, les zones non homogènes introduisent des variations dans l'atténuation acoustique du bruit généré par le moteur.

Par ailleurs, la présence des éclisses de liaison des deux demi-panneaux introduit des ruptures d'impédances dans le panneau acoustique final, préjudiciable à la qualité d'atténuation des bruits générés par le moteur.

Pour remédier à ces inconvénients, on peut, comme enseigné par le brevet FR 2 767 411 délivré au nom de la Demanderesse, mettre en place la couche résistive acoustique par banderolage à partir d'un matériau poreux se présentant sous forme de bande.

Cette manière d'opérer non seulement permet d'éviter les zones non homogènes au point de vue acoustique de la couche poreuse rencontrée, comme indiqué plus haut, dans la technique habituelle de fabrication en deux demi-panneaux, mais également d'éliminer la nécessité de l'éclissage, le banderolage de la couche poreuse pouvant s'appliquer à la mise en place des autres couches, à savoir la couche structurale, l'âme centrale alvéolaire, le réflecteur arrière, en sorte de réaliser un panneau acoustique complet en un seul morceau sans éclisse.

L'absence d'éclisse permet d'augmenter la surface efficace acoustique du panneau, de diminuer sa masse et de réduire les temps et coûts de fabrication.

Si un tel panneau procure un amortissement acoustique de bonne qualité, cet amortissement n'est cependant pas optimal. En effet, les caractéristiques physiques de la couche résistive sont homogènes sur toute l'étendue du panneau et déterminées en considération de la valeur moyenne du bruit que l'on veut atténuer.

Or, les différents modes de propagation des ondes sonores se transforment au cours de leur propagation dans le canal de soufflante. En effet, certains modes subissent une forte atténuation alors que d'autres, au contraire, ne sont pratiquement pas affectés par le panneau acoustique. Dès lors, les caractéristiques du bruit à atténuer sont différentes d'un point à l'autre du canal. En conséquence, un panneau d'atténuation acoustique du type ci-dessus, en n'atténuant qu'un nombre limité de modes, ne permet pas un amortissement optimal du bruit.

Par ailleurs, les panneaux acoustiques ayant pour objectif d'atténuer le bruit généré par le moteur, on cherche de préférence à atténuer la part de bruit qui rayonne vers le sol. Cette exigence entraîne un traitement dissymétrique du problème d'atténuation puisque l'on privilégie l'atténuation vers le bas par rapport à celle vers le haut.

Les panneaux connus ne sont nullement adaptés à un tel traitement acoustique différentiel.

La présente invention a précisément pour but de proposer un procédé de fabrication de panneaux d'atténuation acoustique du type ci-dessus, permettant d'adapter la couche résistive acoustique à l'environnement sonore des panneaux en sorte d'obtenir un amortissement véritablement optimal.

A cet effet, l'invention a pour objet un procédé de fabrication d'un panneau à couche résistive acoustique adaptée, du type comprenant au moins une âme centrale à structure alvéolaire flanquée, d'un côté, d'une couche structurale elle-même recouverte d'une couche résistive acoustique poreuse et, de l'autre côté, d'un réflecteur acoustique total, dans lequel, successivement :
- on enroule par banderolage ladite couche résistive acoustique sur un moule conforme au profil du panneau à obtenir,
- on met en place ladite couche structurale,
- on met en place ladite âme à structure alvéolaire,
- on met en place ledit réflecteur total, puis
- on retire le moule du panneau,
caractérisé en ce qu'au cours de la dépose sur le moule de la couche résistive acoustique la porosité de cette dernière est adaptée localement en correspondance avec les caractéristiques de l'onde sonore au point d'impact, la corrélation entre caractéristiques et zone d'impact étant préalablement déterminée à l'aide de techniques acoustiques conventionnelles appliquées à un panneau-test identique à celui à réaliser.

Suivant un premier mode de mise en oeuvre du procédé, on réalise au préalable une bande continue de matériau acoustiquement résistif constituée de tronçons bout à bout de porosités différentes et l'on banderole ladite bande sur la moule, les porosité et longueur de chaque tronçon ainsi que les modalités de dépose étant déterminées en sorte qu'une fois la couche résistive acoustique en place, celle-ci soit divisée en au moins autant de zones contiguës que de porosités différentes dans ladite bande, en correspondance avec les différentes zones acoustiques déterminées au cours de ladite corrélation préalable réalisée sur le panneau-test.

Suivant un deuxième mode de mise en oeuvre du procédé, on réalise au préalable une pluralité de bandes de matériau acoustiquement résistif de porosités différentes et l'on banderole sur le moule successivement lesdites bandes suivant un ordre et des modalités de dépose déterminés en sorte qu'une fois la couche résistive acoustique en place, celle-ci soit divisée en au moins autant de zones contiguës que de porosités différentes, en correspondance avec les différentes zones acoustiques déterminées au cours de ladite corrélation préalable réalisée sur le panneau-test.

Suivant un troisième mode de mise en oeuvre du procédé, on réalise au préalable une bande d'un matériau acoustiquement résistif de même nature mais dont la porosité varie longitudinalement à la bande et l'on banderole sur le moule ladite bande, les modalités de variation de la porosité et de dépose de la bande étant déterminées en sorte qu'une fois la couche résistive acoustique en place celle-ci présente des variations locales de porosité en correspondance avec les différentes zones acoustiques déterminées au cours de ladite corrélation préalable réalisée sur le panneau-test.

D'autres caractéristiques et avantages ressortiront de la description qui va suivre de modes de mise en oeuvre du procédé de l'invention, description donnée à titre d'exemple uniquement et en regard des dessins annexés sur lesquels :
- la figure 1 est une vue schématique en perspective d'un moteur d'aéronef ;
- la figure 2 est une coupe partielle axiale du nez du moteur de la figure 1 ;
- la figure 3 est une coupe schématique d'un panneau d'atténuation acoustique ;
- la figure 4 est une vue en perspective schématique illustrant le banderolage sur un moule d'une bande de matériau acoustiquement résistif constituée de tronçons bout à bout de porosités différentes, et
- les figures 5a à 5c représentent schématiquement en perspective trois modes différents de banderolage du moule de la figure 4.

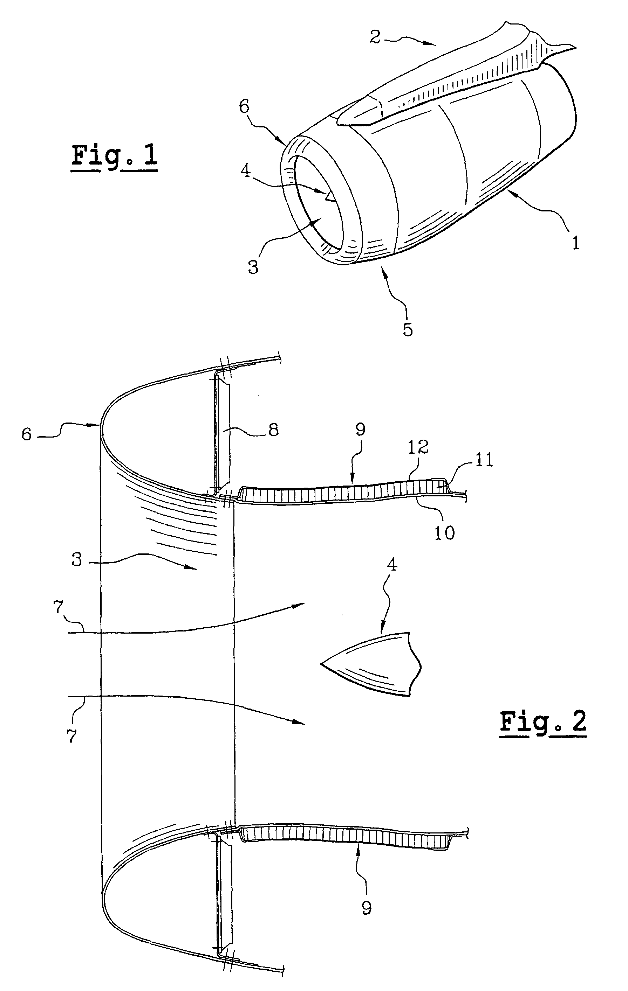

On a représenté en figure 1 un turboréacteur d'aéronef comprenant une nacelle 1 entourant coaxialement le moteur proprement dit et fixée par exemple à une aile (non représentée) de l'aéronef par l'intermédiaire d'un mât désigné d'une manière générale par la référence numérique 2.

La nacelle 1 a une section annulaire et définit entre elle et la partie centrale du moteur, un canal annulaire 3 dit de soufflante. On a représenté en 4 sur la figure le nez en forme d'ogive de la soufflante entraînée par le moteur et qui est placée à l'entrée du canal.

La partie avant 5 de la nacelle 1 constitue une structure d'entrée d'air qui a notamment pour fonction d'assurer l'écoulement aérodynamique de l'air, d'une part, vers le canal de soufflante 3 et, d'autre part, vers l'extérieur de la nacelle 1.

Comme on peut l'observer sur la figure 2 qui est une coupe axiale du nez de la nacelle 1 , la structure d'entrée d'air se compose habituellement d'une lèvre d'entrée d'air 6 présentant en section la forme d'un V ouvert vers l'arrière. Cette lèvre forme l'enveloppe extérieure de la partie avant de la structure d'entrée d'air et assure le partage de l'air entre la partie 7 qui pénètre dans le canal de soufflante 3 et la partie qui s'écoule autour de la nacelle.

La structure d'entrée d'air comporte, outre la lèvre 6, un cadre de renfort avant 8 et un panneau d'atténuation acoustique 9.

Ce panneau 9 a une forme générale annulaire en définissant ledit canal de soufflante par sa face interne 10 en contact avec l'écoulement aérodynamique 7. Le panneau présente une structure propre à atténuer les bruits produits par la partie centrale du moteur et notamment par la soufflante.

Dans la pratique, cette structure est habituellement de type composite sandwich et comprend, outre une couche poreuse résistive acoustique constituant la face 10, une âme alvéolaire 11 telle qu'un nid d'abeilles et, à l'opposé de la couche poreuse 10, une couche 12 formant réflecteur acoustique total.

La structure alvéolaire 11 peut être simple, c'est-à-dire à résonateur unique ou à âme alvéolaire multicouche ou bien multiple, c'est-à-dire à résonateurs superposés ou à âme alvéolaire formée de plusieurs couches superposées séparées ou non par des septums.

La procédé de l'invention s'applique notamment à la fabrication de panneaux d'atténuation acoustique tels que le panneau 9.

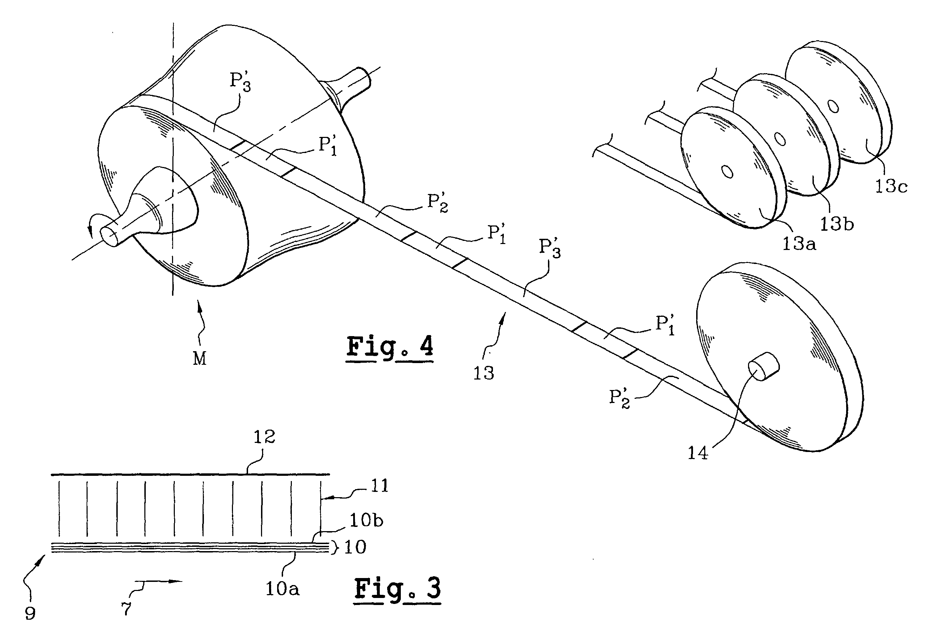

Plus précisément encore, l'invention vise à réaliser un panneau du type du panneau 9 et comportant, comme illustré par la figure 3, une couche résistive (10) formés de deux composants, à savoir une couche poreuse 10a au contact de l'écoulement aérodynamique 7 et une couche structurale 10b interposée entre cette couche et l'âme centrale alvéolaire 11.

Avantageusement, un tel panneau sera réalisé conformément au procédé décrit dans FR 2 767 411 permettant l'obtention d'un panneau annulaire d'un seul bloc, sans éclissage, par dépose des différentes couches constitutives du sandwich par banderolage, drapage ou enroulement.

La présente invention vise lors de la fabrication d'un tel panneau, essentiellement à adapter localement les propriétés acoustiques de la couche résistive acoustique 10a à l'environnement sonore du panneau.

A cet effet, on réalise au préalable un panneau-test identique au panneau 9 et conventionnel et l'on effectue par des essais en soufflerie par exemple, par des techniques bien connues des acousticiens et qu'il n'est utile de rappeler ici, des test et essais permettant de connaître les différentes zones acoustiques du panneau, c'est-à-dire les endroits des panneaux où se manifestent des amortissement sonores différents et de déduire la porosité qu'il faudrait conférer aux différentes zones de la couche résistive du panneau pour avoir un amortissement optimal.

On obtient ainsi une carte géographique reproduisant la face interne du panneau sous forme de régions juxtaposées de porosités différentes.

Cela établi, on va conformément à l'invention, reproduire cette carte géographique lors de la réalisation de la couche résistive acoustique 10a, c'est-à-dire lors de sa formation par banderolage sur un moule ou mandrin approprié, selon plusieurs différents modes de mise en oeuvre.

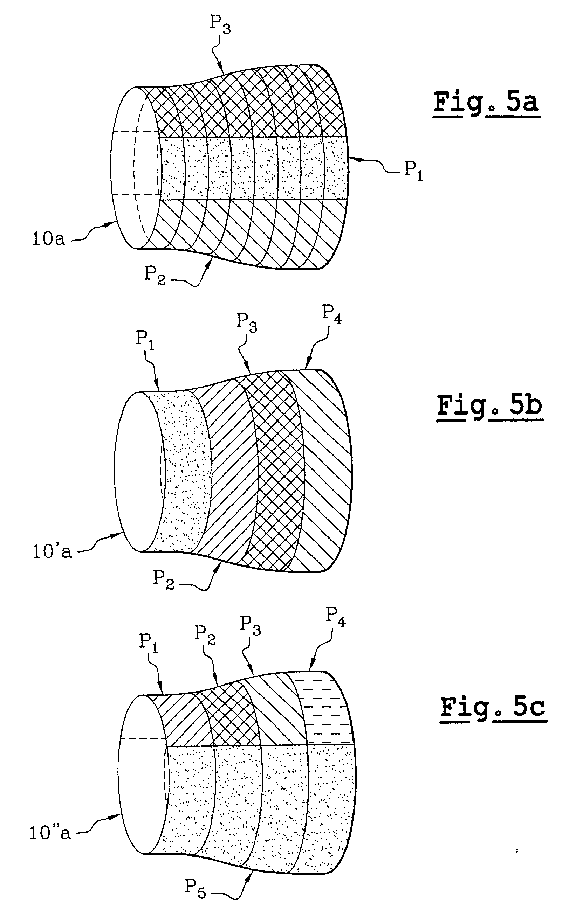

On va tout d'abord se reporter aux figures 4 et 5a qui illustrent la mise en oeuvre du procédé de l'invention suivant un premier mode aboutissant à la réalisation d'une couche résistive annulaire 10a présentant, comme illustré par la figure 5a, trois zones de porosités différentes, respectivement une bande étroite centrale P1 d'axe sensiblement parallèle à celui de la couche 10a, flanquée de deux zones P2 et P3.

Suivant ce premier mode de mise en oeuvre, on réalise (figure 4) au préalable une bande continue 13 de matériau acoustiquement résistif stockée par exemple sous forme enroulée sur un noyau 14.

La bande 13 est formée de tronçons mis bout à bout de porosités différentes et déposée par banderolage sur un moule M dont les formes et dimensions correspondent au panneau 9.

La dépose de la bande sur le moule se fait hélicoïdalement, les spires étant par exemple jointives comme illustré par la figure 5a en sorte de recouvrir le moule suivant une couche unique constituant ladite couche résistive acoustique 10a.

Sur la figure 4, on a représenté un tronçon de bande P'1 flanqué de tronçons P'2 et P'3.

La longueur des tronçons P'1, P'2 et P'3 ainsi que les modalités de dépose sur le moule M sont bien entendu déterminés de façon qu'à chaque tour complet du moule M, lesdits tronçons P'1 à P'3 se positionnent correctement afin que la juxtaposition des tronçons P'1 définisse la bande P1 de la figure 5a, en correspondance avec la carte des zones de porosités différentes définie à l'aide du panneau-test.

Le matériau de la bande 13 est par exemple un tissu formé d'un grillage inoxydable d'un type disponible dans le commerce ou de fibres de carbone ou de verre pré-imprégnées d'une résine thermodurcissable ou thermoplastique.

Les porosités différentes de tronçons P'1 à P'3, qui sont adaptées à celles des trois zones homologues déterminées sur le panneau-test, sont obtenues par exemple par un écartement différent des mailles ou des fils de chaîne et/ou de trame des tissus ou grillages métalliques, ou bien, dans le cas d'une bande 13 de fibres de carbone ou de verre, par une modification de la taille et/ou de la distribution des trous réalisés dans la bande pour la rendre poreuse.

Les tronçons P'1 à P'3 sont aboutés par exemple par soudage ou collage.

Après mise en place sur le moule M de la couche résistive acoustique 10a, on procède à la manière connue pour la mise en place sur le moule M, par dessus la couche 10a, successivement de la couche structurale 10b, par exemple par banderolage ou enroulement, de l'âme centrale alvéolaire 11, par banderolage, drapage ou enroulement, et enfin du réflecteur acoustique total 12, par banderolage, drapage ou enroulement.

Lorsque tous les éléments du panneau sont mis en place, le panneau est démoulé par démontage, rétraction ou fusion du moule M. La consolidation des couches du panneau se fait par chauffage, avant ou après démoulage.

La figure 5b illustre une distribution différente des zones à porosités différentes à réaliser sur la couche résistive acoustique 10'a à fabriquer.

Sur cette figure, on observe quatre zones différentes P1 à P4 constituées par quatre spires juxtaposées résultant de l'enroulement hélicoïdal d'une bande du type de la bande de la figure 4 et qui sera formée de quatre tronçons successifs, de porosités différentes.

La figure 5c illustre une distribution plus complexe de cinq zones P1 à P5 de porosités différentes de la couche 10"a.

D'une manière générale, la longueur de chaque tronçon (P1 à P5) sera déterminée de façon très précise en fonction de la forme et des dimensions du moule M, en sorte que les lignes de démarcation des différentes zones de porosités différentes correspondent bien à la carte établie à l'aide dudit panneau-test.

Sur la figure 4, on a représenté en 13a, 13b et 13c, trois bandes enroulées de matériau acoustiquement résistif de porosités différentes, chaque bande étant formée d'un matériau unique à porosité constante.

Ces trois bandes 13a, 13b, 13c peuvent être utilisées en substitution à la bande 13 pour réaliser la couche 10a dont les trois porosités différentes seront conférées à l'aide des trois bandes susdites.

A l'endroit du moule M où un tronçon de bande de porosité P1 doit être déposé, il suffira de déposer par banderolage un tronçon de l'une des bandes 13a à 13c qui sera découpé à la bonne longueur et solidarisé, par exemple par soudage avec le tronçon précédent puis avec le tronçon suivant, provenant d'une autre bande.

Suivant un troisième mode de mise en oeuvre, la bande 13 est réalisée en un seul morceau continu d'un matériau acoustiquement résistif dont la porosité sera, localement, modifiée en correspondance avec celle des tronçons aboutés P'1, P'2, P'3. Ce matériau peut être un tissu ou grillage métallique dont on fera varier la porosité par paliers par un tissage plus ou moins fin.

Le matériau peut également être un tissu de fibres de carbone ou de verre pré-imprégnées, dont la porosité variera par paliers en modifiant les paramètres (diamètre et/ou distribution) des trous qui seront percés dans la bande.

Ainsi, pour la partie de la bande correspondant au tronçon P'1 par exemple de la figure 4, l'écartement entre les fils de chaîne et/ou de trame du tissu aura une valeur déterminée, pour la partie de longueur correspondant au tronçon P'2, l'écartement sera différent et ainsi de suite pour les autres parties de la bande.

Il est à noter que dans ce mode de réalisation de la bande comme dans celui de la bande 13 de la figure 14, la transition entre deux parties de porosités différentes peut être non plus brutale mais progressive en prévoyant une zone tampon à porosité variant progressivement.

Les panneaux acoustiques obtenus conformément à l'invention assurent ainsi un amortissement acoustique véritablement optimal puisqu'adapté en chaque zone d'un panneau aux caractéristiques des ondes qui vont frapper le panneau.

C'est ainsi notamment que de tels panneaux peuvent être utilisés dans des nacelles de turbomoteurs pour obtenir une atténuation acoustique privilégiée en direction du sol, permettant notamment de mieux satisfaire aux réglementations sur le bruit imposées par les aéroports.

Comme matériau acoustiquement résistif utilisable conformément à l'invention, on peut utiliser tout matériau pouvant être mis sous forme d'une bande ou d'un ruban et conformément aux modalités exposées ci-dessus, soit au moment de la confection de ladite bande soit ultérieurement.

## Revendications

1. Procédé de fabrication d'un panneau (9) à couche résistive acoustique adaptée, du type comprenant au moins une âme centrale à structure alvéolaire (11) flanquée, d'un côté, d'une couche structurale (10b) elle-même recouverte d'une couche résistive acoustique poreuse (10a) et, de l'autre côté, d'un réflecteur acoustique total (12), dans lequel, successivement :
- on enroule par banderolage ladite couche résistive acoustique (10a) sur un moule (M) conforme au profil du panneau (9) à obtenir,
- on met en place ladite couche structurale (10b),
- on met en place ladite âme à structure alvéolaire (11),
- on met en place ledit réflecteur total (12), puis
- on retire le moule (M) du panneau,
**caractérisé en ce qu'**au cours de la dépose sur le moule (M) de la couche résistive acoustique (10a) la porosité de cette dernière est adaptée localement en correspondance avec les caractéristiques de l'onde sonore au point d'impact, la corrélation entre caractéristiques et zone d'impact étant préalablement déterminée à l'aide de techniques acoustiques conventionnelles appliquées à un panneau-test identique à celui à réaliser.

2. Procédé suivant la revendication 1, **caractérisé en ce qu'**on réalise au préalable une bande continue (13) de matériau acoustiquement résistif constituée de tronçons bout à bout (P'1, P'2, P'3) de porosités différentes et l'on banderole ladite bande (13) sur le moule (M), les porosité et longueur de chaque tronçon ainsi que les modalités de dépose étant déterminées en sorte qu'une fois la couche résistive acoustique (10a) en place, celle-ci soit divisée en au moins autant de zones contiguës (P1, P2, P3) que de porosités différentes dans ladite bande (13), en correspondance avec les différentes zones acoustiques déterminées au cours de ladite corrélation préalable réalisée sur le panneau-test.

3. Procédé suivant la revendication 1, **caractérisé en ce qu'**on réalise au préalable une pluralité de bandes (13a, 13b, 13c) de matériau acoustiquement résistif de porosités différentes et l'on banderole sur le moule (M) successivement lesdites bandes suivant un ordre et des modalités de dépose déterminés en sorte qu'une fois la couche résistive acoustique (10a) en place, celle-ci soit divisée en au moins autant de zones contiguës (P1, P2, P3) que de porosités différentes, en correspondance avec les différentes zones acoustiques déterminées au cours de ladite corrélation préalable réalisée sur le panneau-test.

4. Procédé suivant la revendication 1, **caractérisé en ce qu'**on réalise au préalable une bande d'un matériau acoustiquement résistif de même nature mais dont la porosité varie longitudinalement à la bande et l'on banderole sur le moule (M) ladite bande, les modalités de variation de la porosité et de dépose de la bande étant déterminées en sorte qu'une fois la couche résistive acoustique (10a) en place celle-ci présente des variations locales (P1, P2, P3) de porosité en correspondance avec les différentes zones acoustiques déterminées au cours de ladite corrélation préalable réalisée sur le panneau-test.

5. Procédé suivant la revendication 4, **caractérisé en ce que** la porosité de la bande varie par paliers.

6. Procédé suivant la revendication 5, **caractérisé en ce qu'**à chaque palier la transition de la porosité est progressive.

7. Procédé suivant l'une des revendications 1 à 6, **caractérisé en ce que** le matériau acoustiquement résistif est choisi dans le groupe comprenant les tissus ou grillages métalliques et les tissus de fibres de carbone ou de verre pré-imprégnées d'une résine thermoplastique ou thermodurcissable.

8. Procédé suivant l'une des revendications 1 à 7, **caractérisé en ce qu'**avant le démoulage, le panneau est soumis à une consolidation par chauffage des éléments constitutifs.

9. Procédé suivant l'une des revendications 1 à 8, **caractérisé en ce que** le matériau acoustiquement résistif est choisi dans le groupe des tissus ou grillages métalliques et les diverses porosités sont obtenues en modifiant au tissage l'écartement entre les fils de chaîne et/ou de trame.

10. Procédé suivant l'une des revendications 1 à 8, **caractérisé en ce que** le matériau acoustiquement résistif est choisi dans le groupe des tissus de fibres de carbone ou de verre pre-imprégnées et les diverses porosités sont obtenues en faisant varier le diamètre et/ou la distribution de trous percés dans ledit matériau.

## Patentansprüche

1. Verfahren für die Herstellung einer Platte (9) mit angepasster schalldämmender Lage des Typs, der wenigstens einen Mittelkem (11) mit Wabenstruktur aufweist, der auf einer Seite von einer Strukturlage (10b), die ihrerseits mit einer porösen schalldämmenden Lage (10a) bedeckt ist, und auf der anderen Seite von einem Schalltotalreflektor (12) flankiert ist, wobei in dem Verfahren nacheinander:
- die schalldämmende Lage (10a) durch Umschnüren auf eine Form (M), die mit dem Profil der zu erhaltenden Platte (9) übereinstimmt, gewickelt wird,
- die Strukturlage (10b) angeordnet wird,
- der Kern (11) mit Wabenstruktur angeordnet wird,
- der Totalreflektor (12) angeordnet wird und dann
- die Form (M) aus der Platte herausgezogen wird,
**dadurch gekennzeichnet, dass** während der Aufbringung der schalldämmenden Lage (10a) auf die Form (M) die Porosität dieser Lage lokal entsprechend den Eigenschaften der Schallwelle am Auftreffpunkt angepasst ist, wobei die Korrelation zwischen den Eigenschaften und der Auftreffzone im Voraus mit Hilfe herkömmlicher akustischer Techniken, die auf eine mit der herzustellenden Platte völlig übereinstimmende Testplatte angewendet werden, bestimmt wird.

2. Verfahren nach Anspruch 1, **dadurch gekennzeichnet, dass** im Voraus ein ununterbrochenes Band (13) aus schalldämmendem Material hergestellt wird, das aus Ende an Ende miteinander verbundenen Teilstücken (P'1, P'2, P'3) mit unterschiedlichen Porositäten gebildet ist, und das Band auf die Form (M) gewikkelt wird, wobei die Porosität und die Länge jedes Teilstücks sowie die Aufbringungsmodalitäten in der Weise bestimmt sind, dass, sobald die schalldämmende Lage (10a) angeordnet ist, diese in wenigstens so viele aneinander grenzende Zonen (P1, P2, P3) unterteilt ist, wie unterschiedliche Porositäten in dem Band (13) vorhanden sind, die den verschiedenen akustischen Zonen entsprechen, die während der Korrelation bestimmt werden, die an der Testplatte im Voraus ausgeführt wird.

3. Verfahren nach Anspruch 1, **dadurch gekennzeichnet, dass** im Voraus mehrere Bänder (13a, 13b, 13c) aus schalldämmendem Material mit unterschiedlichen Porositäten hergestellt werden und die Bänder nacheinander entsprechend einer Reihenfolge und entsprechend den Aufbringungsmodalitäten auf die Form (M) gewickelt werden, derart, dass, sobald die schalldämmende Lage (10a) angebracht ist, diese in wenigstens so viele aneinander grenzende Zonen (P1, P2, P3) unterteilt ist, wie verschiedene Porositäten vorhanden sind, die den verschiedenen akustischen Zonen entsprechen, die während der Korrelation bestimmt werden, die im Voraus an der Testplatte ausgeführt wird.

4. Verfahren nach Anspruch 1, **dadurch gekennzeichnet, dass** im Voraus ein Band aus einem gleichartigen schalldämmendem Material hergestellt wird, dessen Porosität sich jedoch in Längsrichtung des Bandes ändert, und das Band auf die Form (M) gewickelt wird, wobei die Modalitäten der Änderungen der Porosität und der Aufbringung des Bandes in der Weise bestimmt sind, dass, sobald die schalldämmende Lage (10a) angeordnet ist, diese lokale Porositätsänderungen (P1, P2, P3) aufweist, die den unterschiedlichen akustischen Zonen entsprechen, die während der im Voraus an der Testplatte ausgeführten Korrelation bestimmt werden.

5. Verfahren nach Anspruch 4, **dadurch gekennzeichnet, dass** sich die Porosität des Bandes stufenweise ändert.

6. Verfahren nach Anspruch 5, **dadurch gekennzeichnet, dass** der Übergang der Porosität bei jeder Stufe progressiv ist.

7. Verfahren nach einem der Ansprüche 1 bis 6, **dadurch gekennzeichnet, dass** das schalldämmende Material aus der Gruppe gewählt ist, die Metallgewebe oder -gitter und Kohlenstoff- oder Glasfasergewebe, die mit einem thermoplastischen oder wärmehärtbaren Harz vorimprägniert sind, umfasst.

8. Verfahren nach einem der Ansprüche 1 bis 7, **dadurch gekennzeichnet, dass** die Platte, bevor die Form entnommen wird, einer Verfestigung durch Erwärmen der konstitutiven Elemente unterworfen wird.

9. Verfahren nach einem der Ansprüche 1 bis 8, **dadurch gekennzeichnet, dass** das schalldämmende Material aus der Gruppe der Metallgewebe oder - gitter gewählt ist und die verschiedenen Porositäten durch Modifizieren des Abstandes zwischen den Kett- und/oder Schussfäden des Gewebes erhalten werden.

10. Verfahren nach einem der Ansprüche 1 bis 8, **dadurch gekennzeichnet, dass** das schalldämmende Material aus der Gruppe der Kohlenstoff- oder Glasfasergewebe, die vorimprägniert sind, gewählt ist und die verschiedenen Porositäten durch Ändem des Durchmessers und/oder der Verteilung der in dem Material ausgebildeten Löcher erhalten werden.

## Claims

1. A method of manufacturing a panel (9) with an adapted acoustic resistive layer, of the type comprising at least one central core with an alveolar structure (11) flanked on one side by a structural layer (10b) itself covered with a porous acoustic resistive layer (10a) and, on the other side, a total acoustic reflector (12), in which, successively:
- said acoustic resistive layer (10a) is wound by wrapping on a mould (M) in accordance with the profile of the panel (9) to be obtained,
- said structural layer (10b) is put in place,
- said core with an alveolar structure (11) is put in place,
- said total reflector (12) is put in place, and then
- the mould (M) is removed from the panel,
**characterised in that**, during the placing on the mould (M) of the acoustic resistive layer (10a) the porosity of the latter is adapted locally in correspondence with the characteristics of the sound wave at the point of impact, the correlation between the characteristics and impact area being determined in advance by means of conventional acoustic techniques applied to a test panel identical to that to be produced.

2. A method according to claim 1, **characterised in that** a continuous strip (13) of acoustically resistive material formed of end to end portions (P'1, P'2, P'3) with different porosities is produced in advance and the said strip (13) is wrapped on the mould (M), the porosity and length of each portion and the methods of placing being determined so that, once the acoustic resistive layer (10a) is in place, this is divided into at least as many contiguous areas (P1, P2, P3) as there are different porosities in said strip (13), in correspondence with the various acoustic zones determined during the prior correlation performed on the test panel.

3. A method according to claim 1, **characterised in that** a plurality of strips (13a, 13b, 13c) of acoustically resistive material with different porosities are produced in advance and said strips are wrapped on the mould (M) successively in a given order and according to given deposition methods so that, once the acoustic resistive layer (10a) is in place, the latter is divided into at least as many contiguous areas (P1, P2, P3) as there are different porosities, in correspondence with the various acoustic zones determined during the prior correlation carried out on the test panel.

4. A method according to claim 1, **characterised in that** a strip of an acoustically resistive material with the same nature but whose porosity varies longitudinally to the strip is produced in advance and said strip is wrapped on the mould (M), the methods of varying the porosity and depositing the strip being determined so that, once the acoustic resistive layer (10a) is in place, this exhibits local variations (P1, P2, P3) in porosity in correspondence with the various acoustic zones determined during the prior correlation performed on the test panel.

5. A method according to claim 4, **characterised in that** the porosity of the strip varies in stages.

6. A method according to claim 5, **characterised in that** the transition is the porosity is progressive at each stage.

7. A method according to one of claims 1 to 6, **characterised in that** the acoustically resistive material is chosen from the group comprising metallic fabrics or nettings and fabrics formed of carbon or glass fibres preimpregnated with a thermoplastic or thermosetting resin.

8. A method according to one of claims 1 to 7, **characterised in that**, before removal from the mould, the panel is subjected to consolidation by heating of the constituent elements.

9. A method according to one of claims 1 to 8, **characterised in that** the acoustically resistive material is chosen from the group of metallic fabrics or nettings and the various porosities are obtained by modifying at the time of weaving the separation between the warp and/or weft threads.

10. A method according to one of claims 1 to 8, **characterised in that** the acoustically resistive material is chosen from the group of fabrics made from preimpregnated carbon or glass fibres and the various porosities are obtained by varying the diameter and/or the distribution of holes in said material.
